# EUROPEAN PATENT APPLICATION

(11) **EP 2 363 362 A1**
(43) Date of publication of application: **07.09.2011**
(21) Application number: 11156373.0
(22) Date of filing: 01.03.2011
(51) Int. Cl.: B65G 59/06

(54) **Handling assembly for stacked containers**

(30) Priority: 04.03.2010 IT BO20100128
(71) Applicant: TEC.AL.S.r.l., 47522 Cesena (FC) (IT)
(72) Inventor: FABBRI, Roberto, 47023, CESENA FC (IT)
(74) Representative: Modiano, Micaela Nadia

(57) **Abstract**

A handling assembly (1) for stacked containers which comprises a frame (2) provided with a supporting surface (3) for a column (4) of stacked containers (5) and at least one grip element for a respective container (5). The grip element comprises a movement apparatus (6), controlled by a respective driving unit (7), for lifting the entire column (4) of stacked containers (5), except for the container (5a) arranged at the base of the column (4), and subsequently gradually lowering until the lower container (5a) is delivered onto the supporting surface (3) for picking it up.

## Description

The present invention relates to a handling assembly for stacked containers.

Many products are generally transported and stored by stacking the crates and/or containers that contain them.

This ensures optimization of spaces and protection of the products against any accidental impacts: the column of stacked containers in fact creates around each product a sort of rigid box that "isolates" it from the outside.

This storage method has as a consequence the need to separate each individual container from the others whenever it is necessary to access the product.

In particular, when the containers and the crates are preset to accommodate semi-processed products (which thus require additional operations in order to be able to be sent to market) or food products (which are sold loose and therefore must be accessible to the buyer), it is often necessary to separate the stacked containers from each other.

Actually, this need is felt for any type of product; however, the two cited types have this need more frequently than other types.

In order to perform this operation, operators are normally used who manually separate each container (each crate) from the underlying ones.

Of course, the manual operation is the one that ensures highest safety for the products (handling is not sudden and therefore there is no risk that the products might collide against the walls of the container) but at the same time entails the highest costs and requires great effort by the operators.

Machines are known which are capable of unstacking columns of stacked crates and are constituted by a vertical station onto which the column is to be placed: such station comprises handling units capable of picking up a single crate/container, making it accessible at a subsequent station.

These automated apparatuses have drawbacks, since they comprise actuators, designed to move the handling units, which operate along very broad strokes and therefore the crates, and the products contained therein, can undergo intense stresses (high accelerations) upon these broad movements.

This causes possible accidental impacts of the products against the walls of the containers.

Secondarily, the broad strokes necessarily cause large space occupations of the apparatuses and set an upper limit to the maximum operating speed.

By working at excessively high speeds one may in fact run the risk of subjecting the structure (the frame) of the apparatus to excessive mechanical stresses.

The aim of the present invention is to solve the above-mentioned drawbacks, by proposing a handling assembly for stacked containers that is capable of separating the stacked containers without subjecting the products contained therein to intense mechanical stresses.

Within this aim, an object of the invention is to provide a handling assembly for stacked containers that is capable of separating the stacked containers very rapidly without this causing excessive shaking of the column of containers and of the products accommodated therein.

Another object of the invention is to propose a handling assembly for stacked containers with minimal space occupation and high structural solidity.

A further object of the present invention is to provide a handling assembly for stacked containers that has low costs, is relatively simple to provide in practice and is safe in application.

This aim and these and other objects which will become better apparent hereinafter are achieved by a handling assembly for stacked containers of the type that comprises a frame provided with a supporting surface for a column of stacked containers and at least one grip element for a respective container, characterized in that said grip element comprises a movement apparatus, controlled by a respective driving unit, for lifting the entire column of stacked containers, except for the container arranged at the base of said column, and subsequently gradually lowering until the lower container is delivered onto the supporting surface for picking it up.

Further characteristics and advantages of the invention will become better apparent from the following detailed description of a preferred but not exclusive embodiment of the handling assembly for stacked containers according to the invention, illustrated by way of non-limiting example in the accompanying drawings, wherein:

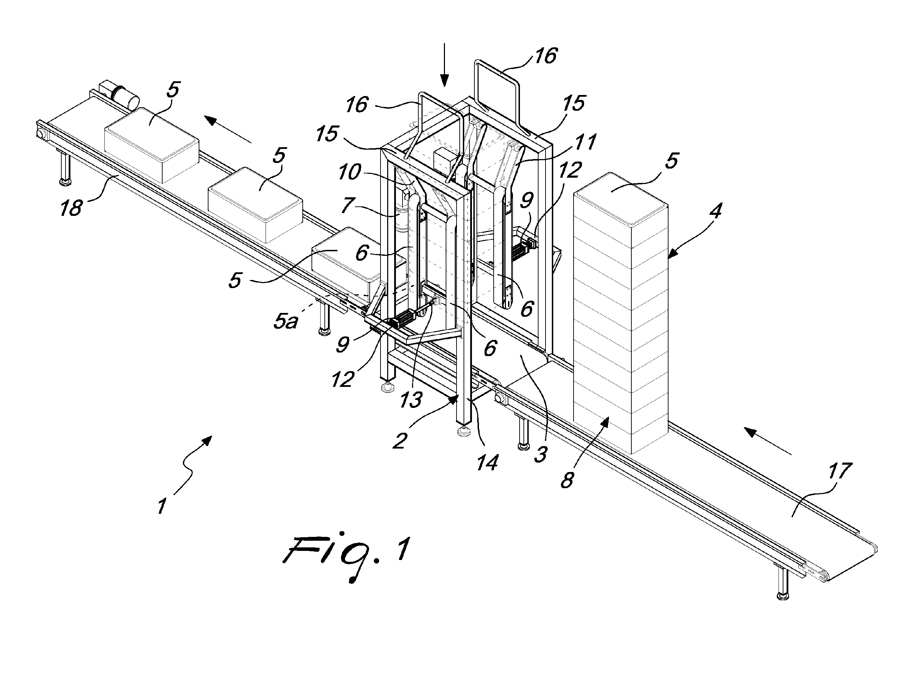

Figure 1 is a perspective view of a handling assembly for stacked containers according to the invention;

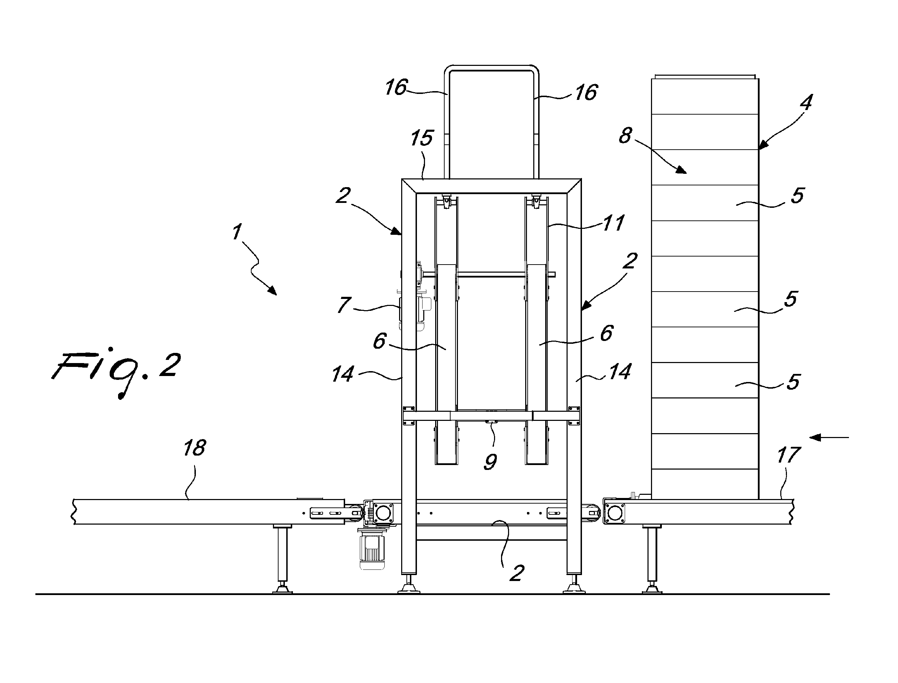

Figure 2 is a side view of a handling assembly for stacked containers according to the invention during the transfer of the column of stacked containers;

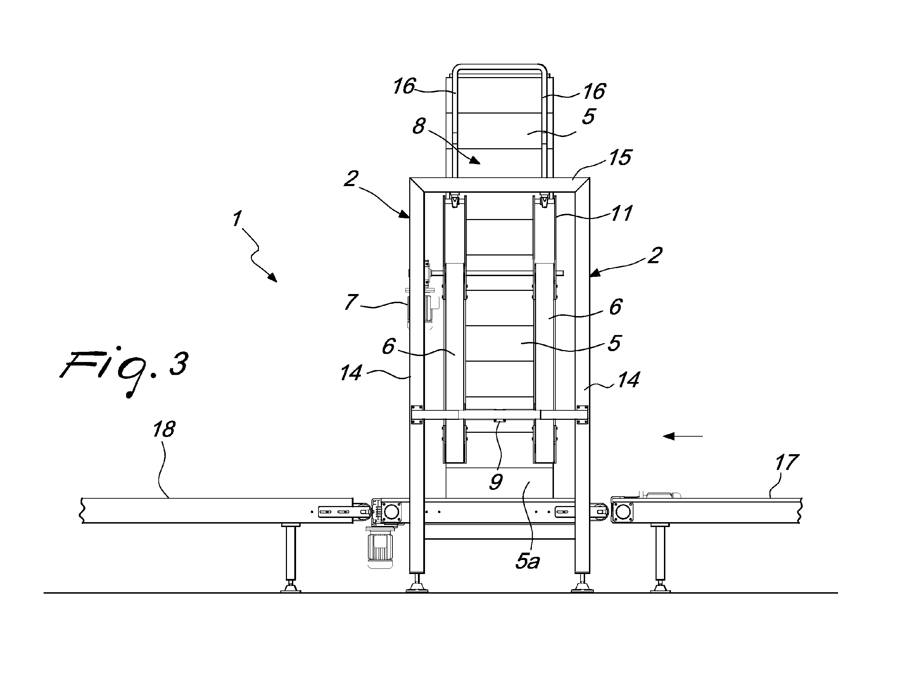

Figure 3 is a side view of a handling assembly for stacked containers according to the invention during the loading of the column of stacked containers;

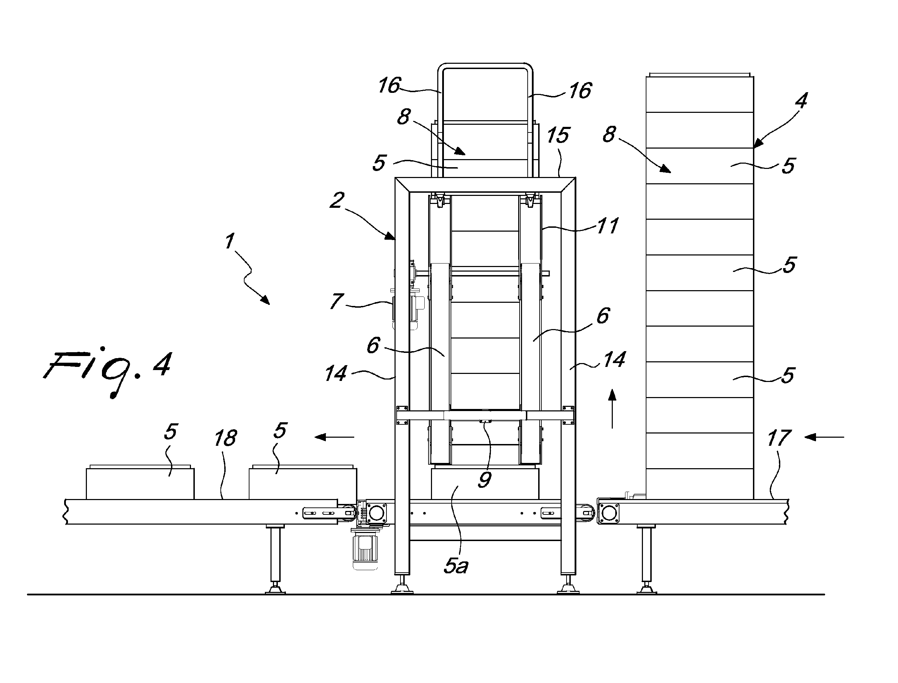

Figure 4 is a side view of a handling assembly for stacked containers according to the invention during the unstacking of the column of stacked containers;

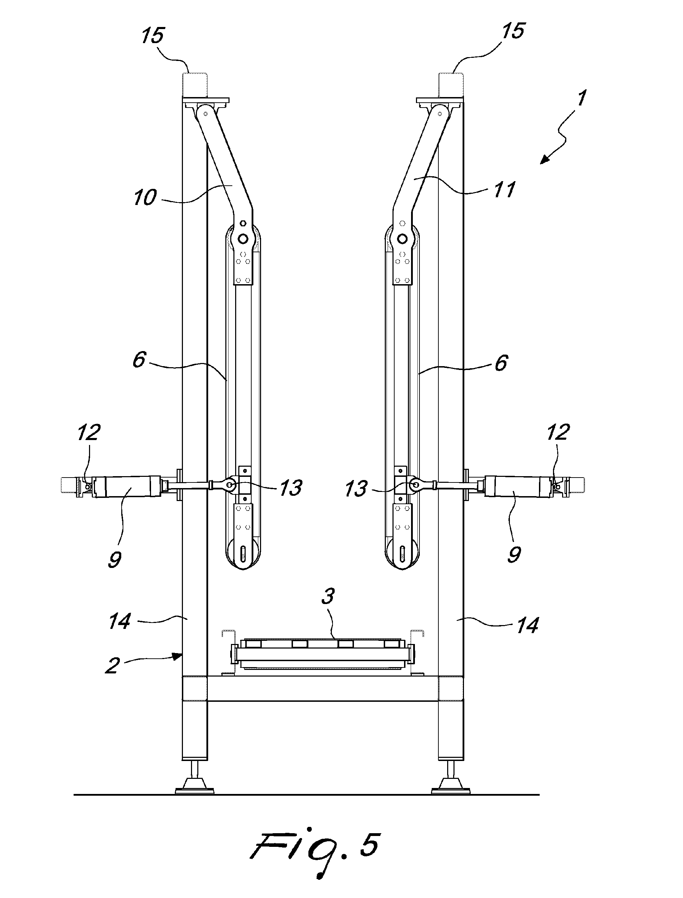

Figure 5 is a front view of a handling assembly for stacked containers according to the invention.

With reference to the figures, the reference numeral 1 generally designates a handling assembly for stacked containers.

The handling assembly 1 comprises a frame 2 which is provided with a supporting surface 3 for a column 4 of stacked containers 5 and at least one grip element for a respective container 5.

In the assembly 1 according to the invention, the grip element comprises a movement apparatus 6, which is controlled by a respective driving unit 7 for lifting the entire column 4 of stacked containers 5, except for the container 5a arranged at the base of the column 4, which is picked up immediately (all the steps of operation will be defined with greater clarity hereinafter), and for subsequent gradual lowering, until the container that in each instance is located in the lowest position (therefore the new container 5a) is delivered onto the supporting surface 3 for picking it up.

The pick-up of the container 5 released onto the supporting surface 3 can be entrusted to additional apparatuses which cooperate with the assembly 1 according to the invention.

The movement apparatus 6, according to an embodiment of the present invention, comprises at least one conveyor belt, which faces one of the lateral surfaces 8 of the column 4 of stacked containers 5, and at least one abutment element, which faces the opposite lateral surface.

At least one between the at least one conveyor belt and at least one abutment element can be translated toward the column 4 of stacked containers 5 by means of an adapted actuator 9 for the clamping of the column 4 of stacked containers 5 between each conveyor belt and the corresponding abutment element.

It should be noted that according to a possible practical application, the conveyor belts positively can be two, arranged at the ends of a first oscillating framework 10 and actuated by the driving unit 7. In particular, the driving unit 7 can be constituted by an adapted electric motor which is controlled to adjust its movement both in terms of position and in terms of speed and direction of rotation.

According to a further embodiment, the abutment element is constituted by a second framework 11, which is provided with at least one respective conveyor belt. The second framework 11 is substantially mirror-like with respect to the first framework 10 in order to ensure correct clamping of the column 4 of stacked containers 5.

For this purpose, the actuator 9 is advantageously of the linear type: it thus has an end 12 associated with the frame 2 and the opposite end 13 associated with the respective framework (the first framework 10 or the second framework 11) for the approach and retreat of the oscillating framework 10 or 11 with respect to the column 4 of stacked containers 5.

Among the linear actuators 9 that can be applied in an assembly 1, mention is made, merely by way of example, of pneumatic pistons, hydraulic pistons, screw-and-nut assemblies and linear induction motors. However, the application of other actuators 9 capable of performing the same function is not excluded.

It should be noted that the at least one conveyor belt is made of a material that has a high surface friction (for example polymeric belts or, better still, elastomeric belts) for optimum grip on the lateral surface 8 of the column 4 of stacked containers 5 against which the belt is kept compressed by means of the actuator 9 (or of the pair of mutually opposite actuators).

The possibility is not excluded to adopt belts that have a surface that is contoured so as to also utilize any interference between the superficial irregularities of the surface 8 (and of the corresponding opposite one) and the contour of the belts.

The frame 2 comprises a plurality of pillars 14 which are arranged substantially along the perimeter of the supporting surface 3.

The first and second oscillating frameworks 10 and 11 are conveniently pivoted to the top of the pillars 14, also with the interposition of any crossmembers 15 for connecting the tops of the pillars 14.

The crossmembers 15 can further comprise adapted guiding sides 16 for conveying the column 4 of stacked containers 5 during the lifting step.

In order to further facilitate the picking of the individual containers 5 (or of any groups constituted by a few stacked containers 5 released onto the surface 3), the supporting surface 3 comprises a movable platform for the translation of the at least one container 5 (or of the small group of containers 5) arranged above it.

It should be noted conveniently that greater speed and effectiveness of the assembly 1 can be obtained if the movable platform that constitutes the supporting surface 3 is comprised in a line for the transfer of the containers 5: such platform is thus arranged downstream of a feeding line 17 of columns 4 of stacked containers 5 and upstream of a line 18 for removing the containers 5 (or a small group of containers 5), which are mutually separated, with respect to the stacked configuration of the column 4.

In practice it is therefore possible to load the columns 4 onto the line 17, which will make them advance until they are brought onto the platform that constitutes the supporting surface 3.

At this point the linear actuators 9 move the frameworks 10 and 11, clamping the column 4 between the belts that constitute the movement apparatuses.

The starting of the driving unit 7 leads to the rotation of the conveyor belts, with consequent lifting of the entire column 4 except for the container 5a arranged at the base of the column 4.

At this point it is sufficient to control the motion of the driving unit 7 in a retrograde direction in order to impose the release of an individual container 5 (or optionally of a small group of containers 5) onto the supporting surface 3.

The movable platform delivers the individual container 5 (or optionally a small group of containers 5) to the pick-up line 18.

The specific operation of the assembly 1 according to the invention provides for the movement of the movable platform that constitutes the supporting surface 3 at low speed during the step for supply and positioning of the column 4 between the conveyor belts 6.

Once correct alignment has been achieved, the platform (which constitutes the supporting surface 3) ceases all motion in order to allow the belts 6 to lift the column 4 (except for the lower container 5a).

Once the upper portion of the column 4 (except for the container 5a) has been lifted, the platform resumes moving.

The movement speed of the platform that constitutes the supporting surface 3, in this last step, can also be extremely high and continuous (however, intermittent operation, operation at modulated speed and operation according to various rules of motion are not excluded) so that whenever a container 5 is released from the bottom of the column 4 as a consequence of a retrograde motion of the belts 6 it can be quickly picked up and delivered to the pick-up line 18.

The assembly 1 according to the invention can also be used to unstack empty containers 5 in order to supply them to subsequent apparatuses in which they are a filled with adapted products: in this case it can operate independently of the orientation and arrangement of the containers 5.

Positively, the handling assembly 1 for stacked containers 5 is capable of separating the stacked containers 5 without subjecting the products contained therein to intense mechanical stresses, since the column 4 is subjected to small movements, all of which can be performed at a controlled speed, without therefore causing dangerous accelerations which might induce unwanted movements of the product in the container 5.

Conveniently, the assembly 1 is capable of separating the stacked containers 5 very rapidly without this causing excessive shaking of the column 4 of containers 5 and of the products accommodated therein: the column 4 is in fact constantly retained by the conveyor belts and by the frameworks 10 and 11 (and is guided in an upper region by the shoulders 16), avoiding any risk of falling.

Advantageously, the handling assembly 1 has minimum space occupation and high structural solidity.

The invention thus conceived is susceptible of numerous modifications and variations, all of which are within the scope of the appended claims; all the details may further be replaced with other technically equivalent elements.

In the exemplary embodiments shown, individual characteristics, given in relation to specific examples, may actually be interchanged with other different characteristics that exist in other exemplary embodiments.

Moreover, it is noted that anything found to be already known during the patenting process is understood not to be claimed and to be the subject of a disclaimer.

In practice, the materials used, as well as the dimensions, may be any according to requirements and to the state of the art.

The disclosures in Italian Patent Application No. BO2010A000128 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A handling assembly for stacked containers of the type comprising a frame (2) provided with a supporting surface (3) for a column (4) of stacked containers (5) and at least one grip element for a respective container (5), **characterized in that** said grip element (6) comprises a movement apparatus (6), controlled by a respective driving unit (7) for lifting the entire column (4) of stacked containers (5), except for the container (5a) arranged at the base of said column (4), and subsequently gradually lowering said column (4) until the lower container (5a) is delivered onto said supporting surface (3) for picking it up.

2. The handling assembly according to claim 1, **characterized in that** said movement apparatus (6) comprises at least one conveyor belt facing one of the lateral surfaces (8) of said column (4) of stacked containers (5), and at least one abutment element facing the opposite lateral surface, at least one of said at least one conveyor belt or at least one abutment element being translatable toward the column (4) of stacked containers (5) by means of an adapted actuator (9), in order to clamp said column (4) of stacked containers (5).

3. The handling assembly according to claim 2, **characterized in that** said conveyor belts are two, arranged at the ends of a first oscillating framework (10) and actuated by said driving unit (7).

4. The handling assembly according to claims 2 and 3, **characterized in that** said abutment element is constituted by a second framework (11) provided with at least one respective conveyor belt, said second framework (11) being substantially mirror-like with respect to said first framework (10).

5. The handling assembly according to one or more of the preceding claims, **characterized in that** said actuator (9) is of the linear type, having one end (12) associated with said frame (2) and the opposite end (13) associated with said framework (11) for the approach and retreat of said oscillating framework (10, 11) with respect to said column (4) of stacked containers (5).

6. The handling assembly according to claim 2, **characterized in that** said at least one conveyor belt is made of a material with high surface friction for optimum grip on the lateral surface (8) of said column (4) of stacked containers (5) against which said at least one conveyor belt is kept compressed by means of said actuator (9).

7. The handling assembly according to one or more of the preceding claims, **characterized in that** said frame (2) comprises a plurality of pillars (14) arranged substantially along the perimeter of said supporting surface (3), said first framework (10) and said second framework (11) being pivoted at the top of said pillars (14), also with the interposition of optional crossmembers (15) for connecting said tops.

8. The handling assembly according to one or more of the preceding claims, **characterized in that** said crossmembers (15) comprise adapted guiding sides (16) for conveying said column (4) of stacked containers (5) during said lifting step.

9. The handling assembly according to one or more of the preceding claims, **characterized in that** said supporting surface (3) comprises a movable platform for translation of the at least one container (5) arranged above it.

10. The handling assembly according to one or more of the preceding claims, **characterized in that** said movable platform is comprised within a line for the transfer of said containers (5), being arranged downstream of a line (17) for feeding columns (4) of stacked containers (5) and upstream of a line (18) for picking up the containers (5) which are mutually separated with respect to the stacked configuration of the column (4).
